# EUROPÄISCHE PATENTSCHRIFT

(11) **EP 2 479 713 B1**
(45) Veröffentlichungstag und Bekanntmachung des Hinweises auf die Patenterteilung: **17.12.2014**
(21) Anmeldenummer: 12151853.4
(22) Anmeldetag: 20.01.2012
(51) Int. Cl.: G06K 19/077

(54) **Adapter für eine Mini-UICC Karte**
Adapter for a mini UICC card
Adaptateur pour une mini-carte UICC

(30) Priorität: 25.01.2011 DE 202011001921 U
(43) Veröffentlichungstag der Anmeldung: 25.07.2012
(73) Patentinhaber: Cairon Group GmbH, 33098 Paderborn (DE)
(72) Erfinder: Pannhorst, Stephan, 33659 Bielefeld (DE)
(74) Vertreter: Ostermann, Thomas

(56) Entgegenhaltungen:
- DE-U1-202009 014 049
- FR-A1- 2 872 946
- FR-A1- 2 875 625

## Beschreibung

Die Erfindung betrifft einen Adapter für eine Mini-UICC-Karte zum Einsetzen in eine Aufnahme eines Mobiltelefons, wobei die Aufnahme für eine Karte im Plug-in-UICC-Format ausgestaltet ist, mit einer als eine Flachseite ausgebildeten Unterseite, mit einer beabstandet zu der flachen Unterseite angeordneten Oberseite, mit die Unterseite und die Oberseite unter Formung einer Öffnung verbindenden inneren Randseiten, an die zur Aufnahme der Mini-UICC-Karte Randseiten der Mini-UICC-Karte anlegbar sind, mit die Unterseite und die Oberseite unter Bildung des Plug-in-UICC-Formats begrenzenden äußeren Randseiten und mit der Öffnung im Bereich der Unterseite zugeordneten Teilböden, an die die Mini-UICC-Karte beim Einsetzen derselben in die Öffnung anlegbar ist zur Abstützung der Mini-UICC-Karte und zur Schaffung einer definierten Lage der Mini-UICC-Karte in der Öffnung.

Ferner betrifft die Erfindung einen Chipkartenträger mit einem Trägerkörper und mit einem über wenigstens einen Verbindungssteg und/oder einen Filmscharnier mit dem Trägerkörper verbundenen Adapter für eine Mini-UICC-Karte.

Aus der DE 20 2009 014 958 U1 ist ein Adapter für Mini-UICC-Karten bekannt, der das genormte Format einer Plug-in-UICC-Karte mit den Dimensionen 15 mm x 25 mm x 0,76 mm aufweist. Der Adapter sowie die Plug-in-UICC-Karte weisen als gemeinsames Kennzeichen eine abgeschrägte Ecke auf, wobei das imaginäre ausgeschnittene gleichschenklige Dreieck eine Schenkellänge von 3 mm aufweist. Die Mini-UICC-Karte, auch Plug-3G-Karte genannte, ist eine Chipkarte der dritten Generation. Sie weist gegenüber dem Adapter reduzierte Dimensionen von 15 mm x 12 mm x 0,76 mm auf. Eine Ecke der Mini-UICC-Karte ist ebenfalls zur Kennzeichnung ihrer Einbaulage abgeschnitten ausgebildet, wobei das imaginäre ausgeschnittene gleichschenklige Dreieck in diesem Fall eine Schenkellänge von 2,5 mm aufweist.

Damit die Mini-UICC-Karte auch in Aufnahmen von Mobiltelefonen eingesetzt werden kann, die zur Aufnahme von größeren Karte des Plug-in-UICC-Formats ausgebildet sind, wird die Mini-UICC-Karte in eine Öffnung des Adapters eingesetzt, wobei sie formschlüssig an die Öffnung grenzender innerer Randseiten des Adapters angelegt wird. Eine einzige definierte Montageposition der Mini-UICC-Karte ergibt sich, weil eine rechteckige Grundform aufweisende Öffnung eine zu dem imaginären Dreieck korrespondierende abgeschnittene Ecke aufweist. Zur Positionierung der Mini-UICC-Karte in der Öffnung des Adapters dienen weiterhin in den Ecken der Öffnung angeordnete Teilböden, welche die Öffnung zu einer Unterseite des Adapters hin begrenzen und hierbei eine Anlagefläche für die Mini-UICC-Karte bilden. Die Mini-UICC-Karte ist somit zuverlässig in der Öffnung gehalten und in ihrer Lage relativ zum Adapter definiert. Obwohl sich diese Lösung in der Praxis grundsätzlich bewährt hat, kann es beim Einsetzen des die Mini-UICC-Karte haltenden Adapters in die Aufnahme des Mobiltelefons zu einem Verhaken des Adapters bzw. der Karte in der Aufnahme kommen.

Aufgabe der vorliegenden Erfindung ist es daher, einen Adapter für Mini-UICC-Karten derart weiterzubilden, dass die Montagefähigkeit desselben verbessert wird.

Zur Lösung der Aufgabe ist die Erfindung in Verbindung mit dem Oberbegriff des Patentanspruchs 1 dadurch gekennzeichnet, dass der Öffnung im Bereich der inneren Randseiten zumindest abschnittsweise eine Rampe zugeordnet ist, welche auf der Oberseite in Richtung der Öffnung ansteigend ausgebildet ist.

Da der hinsichtlich seiner Größe den Plug-in-UICC-Format entsprechende Adapter und die in den Adapter einzusetzende Mini-UICC-Karte eine gleiche Dicke aufweisen und die Mini-UICC-Karte sich mit einer Flachseite derselben an den der Öffnung zugeordneten Teilböden abstützt, ist zwischen einer Oberseite des Adapters und der Mini-UICC-Karte eine Stufe gebildet. Die Rampe ist der Öffnung und damit der in der Öffnung gehaltenen Mini-UICC-Karte so zugeordnet, dass zur Überwindung der Höhendifferenz statt einer Stufe eine schräge Ebene oder eine beliebig andersartig geformte, beispielsweise konvex oder konkav gekrümmte Steigungsfläche ausgebildet ist. Der besondere Vorteil der Erfindung besteht demzufolge darin, dass ein Verhaken des Adapters beim Einsetzen desselben in eine bzw. beim Herausziehen des Adapters aus einer ursprünglich für Plug-in-UICC-Karten vorgesehene Aufnahme eines Mobiltelefons aufgrund der Rampe vermieden wird. Zudem ermöglicht die Rampe statt einer nach dem Stand der Technik schlagartigen eine nunmehr kontinuierliche Zuführung von der Konnektierung der Mini-UICC-Karte dienenden Kontaktstiften des Mobiltelefons zu Kontaktflächen der Mini-UICC-Karte. Der Vorgang des Einsetzens ist insofern besonders schonend, und eine Beschädigung der Kontaktstifte bzw. der Kontaktfläche wird vermieden.

Nach einer bevorzugten Ausführungsform der Erfindung entspricht eine Überhöhung der Rampe wenigstens einer Materialstärke der Teilböden. Vorteilhaft wird durch diese Dimensionierung sichergestellt, dass die Mini-UICC-Karte nach dem Einsetzen derselben in die Öffnung geschützt hinter der Rampe angeordnet ist und sich einfach montieren lässt. Eine - wenn auch kleine - Stufe zwischen der Rampe und der Mini-UICC-Karte wird vermieden.

Nach einer Weiterbildung der Erfindung sind angrenzend an die Rampe ein Überhöhungsbereich und ein Grundbereich ausgebildet. Die Oberseite und die Unterseite des Adapters sind dem Überhöhungsbereich sowie im Grundbereich parallel zueinander orientiert. Der Überhöhungsbereich ist um die Überhöhung versetzt zu dem Grundbereich angeordnet. Vorzugsweise ist der Überhöhungsbereich im Bereich der abgeschrägten Ecke der Öffnung vorgesehen. Die abgeschrägte Ecke dazu dient, die Symmetrie der Öffnung zu durchbrechen und eine definierte Montageposition der Mini-UICC-Karte zu gewährleisten. Vorteilhaft vereinfacht sich das Einsetzen des Adapters und der hierin eingesetzten Mini-UICC-Karte in die Aufnahme des Mobiltelefons durch die auch von herkömmlichen Adaptern bekannte Parallelität von Ober- und Unterseite. Indem die abgeschrägte Ecke der Öffnung als Überhöhungsbereich ausgebildet ist, wird eine Stufe zwischen der Mini-UICC-Karte und dem Adapter auch im Bereich der abgeschrägten Ecke vermieden. Dies führt zu einer weiteren Verbesserung der Montagefähigkeit und gewährleistet einen optimalen Schutz für die Kontakte (Kontaktstifte und Kontaktflächen).

Nach einer Weiterbildung der Erfindung ist eine Oberseite des Adapters im Bereich der Rampe linear und um einen Neigungswinkel α geneigt zur Unterseite, zum Grundbereich der Oberseite bzw. zum Überhöhungsbereich der Oberseite ausgebildet. Vorteilhaft lässt sich eine linear steigende Rampe fertigungstechnisch besonders einfach hergestellt werden. Beispielsweise kann die Linearrampe wie der ganze Adapter als ein Kunststoffspritzgussteil herstellen.

Zur Lösung der Aufgabe ist die Erfindung in Verbindung mit dem Oberbegriff des Schutzanspruchs 10 dadurch gekennzeichnet, dass der Adapter als ein Adapter nach einem der Schutzansprüche 1 bis 9 ausgebildet ist.

Vorzugsweise wird der Kartenträger zusammen mit dem Adapter in einem einzigen Verfahrensschritt auf herkömmlichen Kunststoffspritzgießmaschinen hergestellt. Nach der Herstellung des Chipkartenträgers kann die Mini-UICC-Karte in die Öffnung des an dem Trägerkörper über Verbindungsstege gehaltenen Adapters eingesetzt werden. Vor oder nach dem Einsetzen der Mini-UICC-Karte kann der Chipkartenträger beschriftet bzw. anderweitig konfektioniert und vertrieben werden. Zum Einsetzen der Mini-UICC-Karte in die Aufnahme des Mobiltelefons wird der Adapter aus dem Trägerkörper herausgebrochen.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: eine Draufsicht auf einen erfindungsgemäßen Adapter mit integrierter Rampe,
- Figur 2: einen Längsschnitt durch den Adapter nach Figur 1 entlang der Schnittlinie A-A,
- Figur 3: eine Detailansicht des Bereichs X nach Figur 2,
- Figur 4: eine Schnittdarstellung des Adapters nach Figur 1 mit eingesetzter Mini-UICC-Karte und
- Figur 5: einen Chipkartenträger mit dem erfindungsgemäßen Adapter nach den Figuren 1 bis 4.

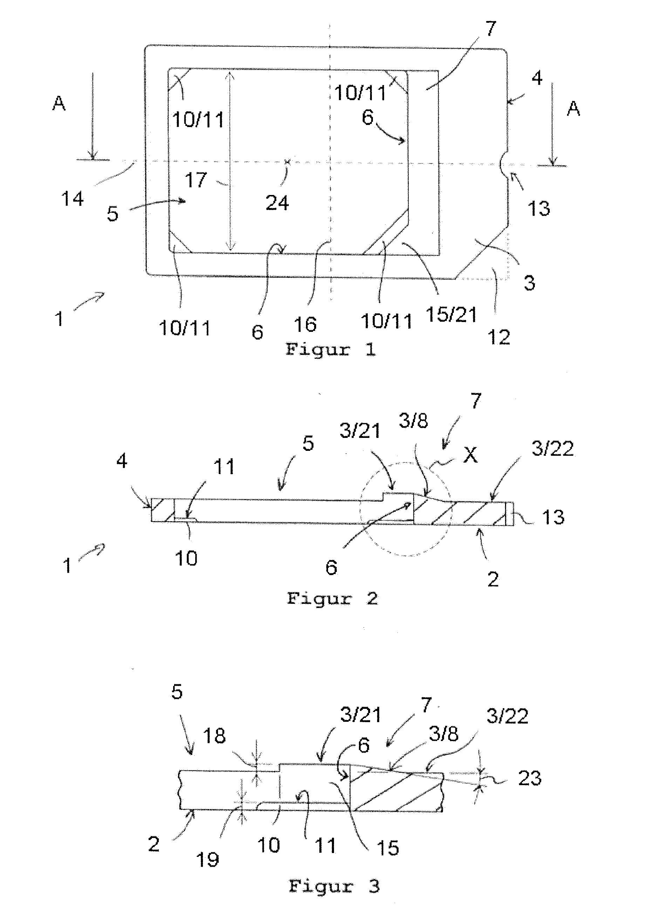

Ein Adapter 1 nach den Figuren 1 bis 4 ist als ein im Wesentlichen flacher Körper durch eine als eine Flachseite ausgebildete Unterseite 2, durch eine beabstandet zu der Unterseite 2 angeordnete Oberseite 3, und durch die Unterseite 2 mit der Oberseite 3 verbindende äußere Randseiten 4 definiert. Zudem weist der Adapter 1 eine Öffnung 5 nach Art eines Durchbruchs auf, wobei die Öffnung 5 durch die Unterseite 2 mit der Oberseite 3 unter Bildung der Öffnung 5 verbindende innere Randseiten 6 begrenzt wird. Die Öffnung 5 weist eine rechteckige Grundform mit einer abgeschrägten Ecke 15 auf.

Der Adapter 1 entspricht mit seinen Außenabmessungen im Wesentlichen der Größe einer handelsüblichen, über viele Jahre eingesetzten Plug-in-UICC-Mobilfunkkarte. Die Öffnung 5 weist einen an die Größe einer in modernen Mobiltelefonen zunehmend eingesetzten Mini-UICC-Mobilfunkkarte 9 auf. Indem die Mini-UICC-Karte 9 in die Öffnung 5 eingesetzt wird, ermöglicht es der Adapter 1, die Mini-UICC-Karte 9 in eine für die Plug-in-UICC-Karte konzipierte Aufnahme eines Mobiltelefons einzusetzen und somit Mobiltelefone, welche ursprünglich für die Plug-in-UICC-Karte entwickelt wurden, mit der neuartigen Mini-UICC-Karte 9 zu betreiben.

Der Öffnung 5 sind im Bereich der Unterseite 2 insgesamt 4 in den Ecken der Öffnung 5 angeordnete Teilböden 10 zugeordnet. Die Teilböden 10 bilden eine Stützfläche 11 für die in die Öffnung 5 eingesetzte Mini-UICC-Karte 9. Durch das Vorsehen der Teilböden 10 ist sichergestellt, dass die Mini-UICC-Karte 9 beim Einsetzen derselben in den Adapter 1 nicht durch die Öffnung 5 hindurchgedrückt wird. Zudem erhält die an den Stützflächen 11 der Teilböden 10 anliegende Mini-UICC-Karte 9 eine definierte Lage in Bezug auf den Adapter 1.

Um eine definierte Montageposition des Adapters 1 in der nicht dargestellten Aufnahme des Mobiltelefons zu gewährleisten, ist eine Ecke des Adapters 1 abgeschrägt ausgebildet, wobei ein imaginäres, abgeschnittenes, gleichschenkliges Dreieck 12 mit einer Schenkellänge von 3 mm als eine erste Ausnehmung 12 im Bereich der äußeren Randseiten 4 ausgebildet ist. Benachbart zu der ersten Ausnehmung 12 ist eine weitere, kreisbogenförmig ausgestaltete zweite Ausnehmung 13 symmetrisch in Bezug zu einer Längsmittelachse 14 des Adapters 1 vorgesehen. Auf analoge Weise wird die Montageposition der Mini-UICC-Karte 9 in der Öffnung 5 durch die abgeschrägte Ecke 15 festgelegt. Die abgeschrägte Ecke 15 ist korrespondierend zu der dreieckförmigen ersten Ausnehmung 12 des Adapters 1 angeordnet. Die Schenkellänge des durch die abgeschrägte Ecke 15 gebildeten, gleichschenkligen Dreiecks beträgt 2,5 mm.

Die Öffnung 5 ist mittig in Bezug auf die Längsmittelachse 14 und außermittig in Bezug auf eine senkrecht zur Längsmittelachse 14 orientierte Quermittelachse 16 des Adapters 1 angeordnet. Eine Breite 17 der Öffnung 5 beträgt 12 mm. Die Breite 17 ist abgestimmt auf die Breite der Mini-UICC-Karte 9.

Der Öffnung 5 ist auf der Oberseite 3 eine in Richtung der Öffnung 5 ansteigend ausgebildete Rampe 7 zugeordnet. Die Rampe 7, welche sich bis unmittelbar an die Öffnung 5 erstreckt, ist durch eine lineare Schrägfläche 8 gebildet, welche der Oberseite 3 zugehört.

Die Rampe 7 erstreckt sich über die komplette Breite 17 der Öffnung 5. Eine Überhöhung 18 der Rampe 7 entspricht hierbei einer Materialstärke 19 der Teilböden 10. Die in die Öffnung 5 eingesetzte Mini-UICC-Karte 9 ist im Bereich der Rampe 7 bündig zu der unmittelbar angrenzenden Oberseite 3 des Adapters 1 angeordnet.

Die Rampe 7, die erste Ausnehmung 12 und die zweite Ausnehmung 13 der äußeren Randseiten 4 sowie die abgeschrägte Ecke 15 der Öffnung 5 sind auf einer gemeinsamen Seite der Quermittelachse 16 des Adapters 1 vorgesehen. Ein der rechteckigen Grundform der Öffnung 5 zugeordneter Flächenmittelpunkt 24 der Öffnung 5 sowie die Rampe 7 liegen demgegenüber auf gegenüberliegenden Seiten der Quermittelachse 16. Die Rampe 7 ist symmetrisch bezüglich der Quermittelachse 16 des Adapters 1 ausgebildet. Die Überhöhung 18 und die Materialstärke 19 der Teilböden 10 betragen typischer Weise zwischen 0,05 mm und 0,15 mm.

Nach einem nicht dargestellten Ausführungsbeispiel der Erfindung kann die Überhöhung 18 größer sein als die Materialstärke 19 der Teilböden 10. In diesem Fall können die Teilböden 10 beispielsweise eine Stärke 19 von 0,13 mm aufweisen, während die Überhöhung 18 0,15 mm beträgt. Im montierten Zustand der Mini-UICC-Karte 9 ist die Oberseite 20 dann geringfügig unterhalb einer angrenzenden Oberseite 3 des Adapters 1 im Bereich der Rampe 7 angeordnet. Ein einfaches Einsetzen des Adapters 1 mit der Mini-UICC-Karte 9 in die Aufnahme des Mobiltelefons sowie ein Schutz der elektrischen Kontakte sind auch hier gewährleistet.

Angrenzend an die Rampe 7 weist die Oberseite 3 einen Überhöhungsbereich 21 sowie einen Grundbereich 22 auf. Die Oberseite 3 ist in dem Überhöhungsbereich 21 und in dem Grundbereich 22 parallel zur Unterseite 2 orientiert. Im Grundbereich 22 beträgt ein Abstand zwischen Oberseite 3 und Unterseite 2 beispielsweise 0,76 mm. Der Abstand entspricht der Dicke handelsüblicher Mini-UICC-Karten und Plug-in-UICC-Karten. Im Überhöhungsbereich 21 ist ein Abstand von Oberseite 3 und Unterseite 2 um die Überhöhung 18 größer. Gegenüber dem Überhöhungsbereich 21, dem Grundbereich 22 sowie der Unterseite 2 ist die Schrägfläche 8 der Rampe 7 um einen Neigungswinkel 23 geneigt angeordnet. Der Neigungswinkel 23 beträgt vorzugsweise zwischen 1 und 10°, besonders bevorzugt zwischen 3 und 7°.

Die abgeschnittene Ecke 15 der Öffnung 5 definiert zugleich den Überhöhungsbereich 21 der Oberseite 3. Indem die abgeschnittene Ecke 15 als Überhöhungsbereich 21 ausgebildet ist, schließt die Oberseite 20 der Mini-UICC-Karte 9 über die gesamte Breite 17 der Öffnung 5 bündig mit der Oberseite 3 des Adapters 1 ab. Die Mini-UICC-Karte 9 kann in einfacher Weise in die Aufnahme des Mobiltelefons eingesetzt werden.

Nach einem nicht dargestellten, alternativen Ausführungsbeispiel der Erfindung kann die Rampe 7 sich um die komplette Öffnung 5 erstrecken. Ebenfalls kann vorgesehen sein, Rampen 7 an zwei oder mehr gegenüberliegenden bzw. benachbarten inneren Randseiten 6 auszubilden. Die Montierbarkeit des Adapters 1 sowie der Schutz der Kontakte bei der Montage werden hierdurch weiter verbessert.

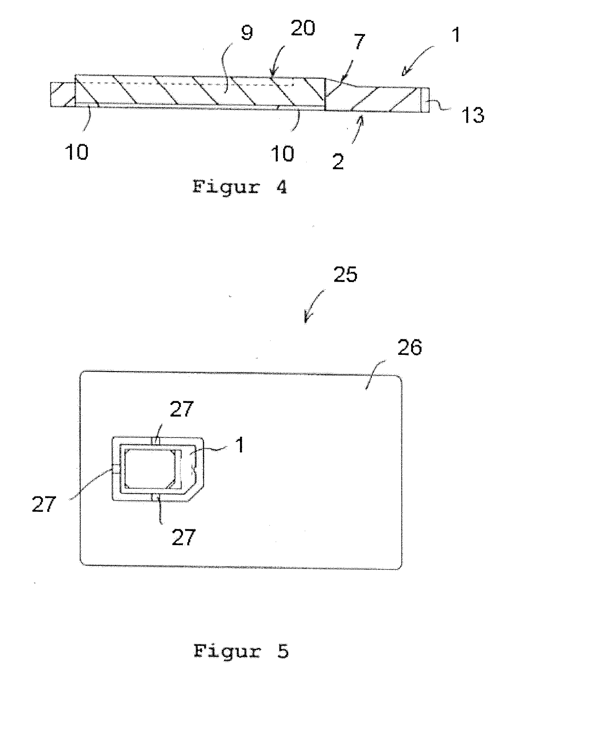

Figur 5 zeigt einen Chipdatenträger 25, welcher als wesentliche Bestandteile einen Trägerkörper 26, den erfindungsgemäßen Adapter 1 sowie den Trägerkörper 26 mit dem Adapter 1 verbindende Stege 27 aufweist. Der Chipkartenträger 25 hat beispielsweise Scheckkartenformat. Der Chipdatenträger 25 kann beispielsweise mittels eines einzigen Verfahrensschritts im herkömmlichen Spritzgießverfahren hergestellt werden. Nach der Herstellung des Chipdatenträgers 25 kann derselbe zur Konfektionierung bedruckt oder anderweitig gekennzeichnet werden. Ferner kann die Mini-UICC-Karte 9 nach der Herstellung des Chipdatenträgers 25 in die Öffnung 5 des Adapters 1 eingesetzt werden. Der Chipdatenträger 25 mit der Mini-UICC-Karte 9 wird dann in den Handel gebracht. Ein Endabnehmer trennt den Adapter 1 vom Trägerkörper 26, indem er die Verbindungsstege 27 durchtrennt, und setzt den Adapter 1 samt Mini-UICC-Karte 9 in die Aufnahme des Mobiltelefons ein.

## Patentansprüche

1. Adapter für eine Mini-UICC-Karte zum Einsetzen in eine Aufnahme eines Mobiltelefons, wobei die Aufnahme für eine Karte im Plug-in-UICC-Format ausgestaltet ist, mit einer als eine Flachseite ausgebildeten Unterseite (2), mit einer beabstandet zu der flachen Unterseite (2) angeordneten Oberseite (3), mit die Unterseite (2) und die Oberseite (3) unter Formung einer Öffnung (5) verbindenden inneren Randseiten (6), an die zur Aufnahme der Mini-UICC-Karte Randseiten der Mini-UICC-Karte anlegbar sind, mit die Unterseite (2) und die Oberseite (3) unter Bildung des Plug-in-UICC-Formats begrenzenden äußeren Randseiten (4) und mit der Öffnung (5) im Bereich der Unterseite (2) zugeordneten Teilböden (10), an die die Mini-UICC-Karte beim Einsetzen derselben in die Öffnung (5) anlegbar ist zur Abstützung der Mini-UICC-Karte und zur Schaffung einer definierten Lage der Mini-UICC-Karte in der Öffnung (5), **dadurch gekennzeichnet, dass** der Öffnung (5) im Bereich der inneren Randseiten (6) zumindest abschnittsweise eine Rampe (7) zugeordnet ist, welche auf der Oberseite (3) in Richtung der Öffnung (5) ansteigend ausgebildet ist.

2. Adapter nach Anspruch 1, **dadurch gekennzeichnet, dass** eine Überhöhung (18) der Rampe (7) wenigstens einer Materialstärke (19) der Teilböden (10) entspricht.

3. Adapter nach Anspruch 1 oder 2, **dadurch gekennzeichnet, dass** an die Rampe (7) angrenzend ein Überhöhungsbereich (21) und ein Grundbereich (22) ausgebildet sind, wobei die Oberseite (3) und die Unterseite (2) im Überhöhungsbereich (21) und im Grundbereich (22) zueinander parallel orientiert angeordnet sind und/oder wobei der Überhöhungsbereich (21) um die Überhöhung (18) versetzt zu dem Grundbereich (22) angeordnet ist.

4. Adapter nach einem der Ansprüche 1 bis 3, **dadurch gekennzeichnet, dass** die Öffnung (5) eine rechteckige Grundform aufweist mit einer abgeschrägten Ecke (15) und/oder dass der Überhöhungsbereich (21) zumindest im Bereich der abgeschrägten Ecke (15) ausgebildet ist.

5. Adapter nach einem der Ansprüche 1 bis 4, **dadurch gekennzeichnet, dass** ein Flächenmittelpunkt (24) der die Öffnung (5) definierenden rechteckigen Grundform und die Rampe (7) auf gegenüberliegenden Seiten einer Quermittelachse (16) angeordnet sind.

6. Adapter nach einem der Ansprüche 1 bis 5, **dadurch gekennzeichnet, dass** die Rampe (7) sich entlang einer kompletten Breite (17) der Öffnung (5) erstreckt.

7. Adapter nach einem der Ansprüche 1 bis 6, **dadurch gekennzeichnet, dass** die Rampe (7) und wenigstens eine die Montagelage des Adapters (1) in der Aufnahme definierende, den äußeren Randseiten (4) zugeordnete Ausnehmung (12, 13) auf einer gemeinsamen Seite der Quermittelachse (16) angeordnet sind.

8. Adapter nach einem der Ansprüche 1 bis 7, **dadurch gekennzeichnet, dass** eine zu der Oberseite (3) gehörende Schrägfläche (8) der Rampe (7) eben und um einen Neigungswinkel (23) geneigt in Bezug zu der Unterseite (2) und/oder zu dem Grundbereich (22) der Oberseite (3) und/oder zu dem Überhöhungsbereich (21) der Oberseite (3) angeordnet ist.

9. Adapter nach einem der Ansprüche 1 bis 8, **dadurch gekennzeichnet, dass** die Rampe (7) symmetrisch bezüglich einer Längsmittelachse (14) ausgebildet ist.

10. Chipkartenträger mit einem Trägerkörper und mit einem über wenigstens einen Verbindungssteg und/oder einen Filmscharnier mit dem Trägerkörper verbundenen Adapter für eine Mini-UICC-Karte, **gekennzeichnet durch** einen Adapter (1) nach einem der Ansprüche 1 bis 9.

## Claims

1. An adapter for a mini-UICC card insertable into a receptacle of a mobile phone, wherein the receptacle is designed for a card in the plug-in UICC format, with a bottom side (2) formed as a flat side, with a top side (3) arranged at a distance from the flat bottom side (2), with inner edge sides (6) connecting the bottom side (2) to the top side (3) under formation of an opening (5), said inner edge sides being designed such that edge sides of the mini-UICC card can be placed against them in order to receive the mini-UICC card, with outer edge sides (4) delimiting the bottom side (2) and the top side (3) under formation of the plug-in UICC format and with partial bottoms (10) allocated to the opening (5) in the area of the bottom side (2) such that the mini-UICC card on its insertion into the opening (5) can be placed against said partial bottoms in order to support the mini-UICC card and to create a defined position of the mini-UICC card inside the opening (5), **characterized in that** the opening (5) is allocated a ramp (7), at least in sections, in the region of the inner edge sides (6), said ramp being formed on the top side (3) such that it ascends in the direction of the opening (5).

2. The adapter of claim 1, **characterized in that** an excess height (18) of the ramp (7) at least corresponds to a material thickness (19) of the partial bottoms (10).

3. The adapter of claim 1 or 2, **characterized in that** an excess height area (21) and a base area (22) are formed adjacent to the ramp (7), wherein the top side (3) and the bottom side (2) are arranged parallel to each other in the excess height area (21) and in the base area (22), and/or wherein the excess height area (21) is arranged spaced apart by the excess height (18) from the base area (22).

4. The adapter of any one of claims 1 to 3, **characterized in that** the opening (5) has a rectangular basic shape with a bevelled edge (15) and/or **in that** the excess height area (21) is formed at least in the region of the bevelled edge (15).

5. The adapter of any one of claims 1 to 4, **characterized in that** an area centroid (24) of the rectangular basic shape defining the opening (5) and the ramp (7) are arranged on opposite sides of a transverse central axis (16).

6. The adapter of any one of claims 1 to 5, **characterized in that** the ramp (7) extends along a full width (17) of the opening (5).

7. The adapter of any one of claims 1 to 6, **characterized in that** the ramp (7) and at least one recess (12, 13), which is allocated to the outer edge sides (4) and defines the mounting position of the adapter (1) inside the receptacle, are arranged on the same side of the transverse central axis (16).

8. The adapter of any one of claims 1 to 7, **characterized in that** a slanted surface (8) of the ramp (7) formed as part of the top side (3) is planar and inclined by an angle of inclination (23) in relation to the bottom side and/or to the base area (22) of the top side and/or to the excess height area (21) of the top side (3).

9. The adapter of any one of claims 1 to 8, **characterized in that** the ramp (7) is formed symmetrically with regard to a longitudinal central axis (14).

10. A chip card holder with a carrier body and an adapter for a mini-UICC card, said adapter being connected to the carrier body via at least one connecting bridge and/or a film hinge, **characterized by** an adapter (1) of any one of claims 1 to 9.

## Revendications

1. Adaptateur pour une carte mini-UiCC à insérer dans un logement d'un téléphone mobile, sachant que le logement est conçu pour recevoir une carte de format UiCC enfichable, avec une face inférieure (2) en forme de côté plat, avec une face supérieure (3), disposée à distance de la face inférieure (2), avec des faces latérales intérieures (6), reliant la face inférieure (2) et la face supérieure (3), sur lesquelles des faces latérales de la carte mini-UICC peuvent être appliquées pour la réception de ladite carte mini-UICC, avec des faces latérales extérieures (4) qui limitent la face inférieure (2) et la face supérieure (3) en réalisant le format UICC enfichable, et avec des fonds partiels (10) associés à l'ouverture (5) dans la région de la face inférieure (2), sur lesquels la carte mini-UICC peut être appliquée lors de l'insertion de celle-ci dans l'ouverture (5) pour soutenir ladite carte mini-UICC et pour positionner de manière définie la carte mini-UICC dans l'ouverture (5), **caractérisé en ce que**, dans la région des faces latérales intérieures (6), une rampe (7) qui, formée sur la face supérieure (3), s'élève dans la direction de l'ouverture (5), est associée, au moins par sections, à l'ouverture (5).

2. Adaptateur selon la revendication 1, **caractérisé en ce qu'**une surélévation (18) de la rampe (7) correspond au moins à une épaisseur du matériau (19) des fonds partiels (10).

3. Adaptateur selon revendication 1 ou 2, **caractérisé en ce que**, contigües à la rampe (7), sont formées une section surélevée (21) et une section de base (22), sachant que la face supérieure (3) et la face inférieure (2) sont orientées parallèlement l'une à l'autre dans la section surélevée (21) et dans la section de base (22), et / ou que la section surélevée (21) est décalée de la surélévation (18) par rapport à la section de base (22).

4. Adaptateur selon l'une des revendications 1 à 3, **caractérisé en ce que** l'ouverture (5) présente une forme de base rectangulaire avec un coin coupé (15) et / ou que la région surélevée (21) est formée au moins dans la zone du coin coupé (15).

5. Adaptateur selon l'une des revendications 1 à 4, **caractérisé en ce que** le centre (24) de la surface de la forme de base rectangulaire, qui définit l'ouverture (5), et la rampe (7) sont disposés sur des côtés d'un axe médian transversal (16) opposés l'un à l'autre.

6. Adaptateur selon l'une des revendications 1 à 5, **caractérisé en ce que** la rampe (7) s'étend sur une largeur (17) complète de l'ouverture (5).

7. Adaptateur selon l'une des revendications 1 à 6, **caractérisé en ce que** la rampe (7) et au moins un évidement (12, 13), associé aux faces latérales extérieures (4) et définissant la position de montage de l'adaptateur (1) dans le logement, sont disposés sur une face commune de l'axe médian longitudinal (16).

8. Adaptateur selon l'une des revendications 1 à 7, **caractérisé en ce qu'**une surface oblique (8) de la rampe (7), associée à la face supérieure (3), est inclinée à plat et d'un angle d'inclinaison (23) par rapport à la face inférieure (2) et / ou à la section de base (22) de la face supérieure (3) et / ou à la section surélevée (21) de la face supérieure (3).

9. Adaptateur selon l'une des revendications 1 à 8, **caractérisé en ce que** la rampe (7) est de conception symétrique par rapport à un axe médian longitudinal (14).

10. Support de carte à puce avec un corps de support et avec un adaptateur pour une carte mini-UICC, lequel adaptateur est relié au corps de support par l'intermédiaire d'au moins une patte de liaison et / ou d'une charnière pelliculaire, **caractérisé par** un adaptateur (1) selon l'une des revendications 1 à 9.
